# EUROPEAN PATENT SPECIFICATION

(11) **EP 2 005 429 B1**
(45) Date of publication and mention of the grant of the patent: **01.08.2012**
(21) Application number: 06768626.1
(22) Date of filing: 25.05.2006
(51) Int. Cl.: G11B 7/254

(54) **OPTICAL DISC USING METHYLMETHACRYLATE-ACRYLONITRILE-BUTADIENE-STYRENE COPOLYMER RESIN**
OPTISCHER DATENTRÄGER MIT EINEM METHYLMETHACRYLAT-ACRYLONITRIL-BUTADIENSTYROLCOPOLYMERHARZ
DISQUE OPTIQUE FAISANT APPEL À UNE RÉSINE COPOLYMÈRE DE MÉTHYLMÉTHACRYLATE-ACRYLONITRILE-BUTADIÈNE-STYRÈNE

(30) Priority: 21.03.2006 KR 20060025828
(43) Date of publication of application: 24.12.2008
(73) Proprietor: CHEIL INDUSTRIES INC., Gumi-si, Gyeongsangbuk-do 730-710 (KR)
(72) Inventor: JEONG, Bong Jae, Jeollanam-do, 555-751 (KR); HA, Doo Han, Jeollanam-do, 555-803 (KR)
(74) Representative: Bublak, Wolfgang
(86) International application number: PCT/KR2006/001977
(87) International publication number: WO 2007/108571

(56) References cited:
- EP-A1- 1 589 060
- EP-A2- 1 265 234
- JP-A- 01 132 625
- JP-A- 05 239 338
- JP-A- 2003 242 679
- KR-A- 20010 075 534
- KR-A- 20020 089 361
- KR-B1- 100 148 235

## Description

### Technical Field

The present invention relates to an optical disc employing a methylmethacrylate-acrylonitrile-butadiene-styrene copolymer resin (hereinafter, MABS resin). More particularly, the present invention relates to an optical disc having a double-layered structure including an active disc and a dummy disc, in which the dummy disc is made of methylmethacrylate-acrylonitrile-butadiene-styrene copolymer (MABS) resin, so that the optical disc has excellent flowability, strength, elongation and UV permeability and that the production costs of the optical disc may decrease.

### Background Art

An optical disc such as a compact disc has been widely used as a means for recording and reproducing information. This compact disc comprises a disc-shaped resin substrate made of polymethylmethacrylate resin or polycarbonate resin and an information recording layer having a pit on the surface of the disc-shaped resin substrate. A reflective layer and a protective layer may be formed in order on the surface of the information recording layer.

However, there is a disadvantageinthat the compact disc has an insufficient storage capacity. So, in order to increase the storage capacity, a digital versified disc (DVD) has been developed.

Generally, the digital versified disc includes two disc members comprising an active disc which records information and a dummy disc for protecting the active disc. In contrast, the compact disc has only a single disc.

The rotation speed for driving a DVD is about 10,000 rpm. Because a central core of the DVD is fixed during the rotation and driving, the impact strength of the central core of DVD is very important. It is especially important that the dummy disc, whose object is to protect an active disc, have crack resistance during driving or being stored.

Polycarbonate or polymethylmethacrylate resin has been used as a material for the active disc. Polycarbonate resin has been conventionally used as a material for the dummy disc because of its good qualities of adhesion to the active disc, elongation, bending property, and good impact resistance, which are all required properties for protecting an active disc.

However, polycarbonate resin is a relatively expensive resin, which leads to the disadvantage of increasing the production costs of an optical disc for a DVD. Further, polycarbonate resin requires high temperature and pressure during a molding process because of its low flowability, which results in decreasing productivity.

If polymethylmethacrylate, SAN resin, or GPPS resin is used as a material for a dummy disc, although it is possible to provide an optical disc by UV adhesion, these resins have low capability for protecting an active disc so that problems, such as a crack on an optical disc, may easily occur.

Furthermore, if ABS resin is used as a material for a dummy disc, although the dummy disc may have impact resistance, it may not be possible to adhere the dummy disc by UV adhesion. Thus, an alternative method for adhesion other than UV adhesion should be adopted, which leads to the disadvantage of incurring additional steps.

Accordingly, the present inventors have developed an optical disc that has excellent flowability, strength, elongation and UV permeability as well as high productivity and may decrease production costs by employing a MABS resin as a dummy disc.

### Disclosure of Invention

### Technical Problem

An object of the present invention is to develop a new material for a dummy disc that can replace polycarbonate resin which has conventionally been used as a dummy disc and to provide an optical disc using the new material as a dummy disc.

Another object of the present invention is to provide an optical disc that not only has excellent flowability, strength, elongation and UV permeability but also can decrease production costs.

A further object of the present invention is to provide an optical disc having good crack resistance.

Other objects and advantages of this invention will be apparent from the ensuing disclosure and appended claims.

### Technical Solution

One aspect of the invention provides an optical disc comprising an active disc 1 in which information is recorded; and a dummy disc 4 for protecting the active disc, wherein the active disc and the dummy disc are bonded to form a single body, and wherein the dummy disc is made of methylmethacrylate-acrylonitrile-butadiene-styrene copolymer (MABS) resin, wherein said MABS resin comprises about 53 to 64% by weight of methylmethacrylate, about 3 to 5% by weight of acrylonitrile, about 10 to 30% by weight of polybutadiene, and about 14 to 19% by weight of styrene.

In some embodiments, an average particle size of rubber in said methyl-methacrylate-acrylonitrile-butadiene-styrene copolymer (MABS) resin is about 100~350 nm.

In some embodiments, the methylmethacrylate-acrylonitrile-butadiene-styrene copolymer (MABS) resin employs butadiene-styrene copolymer rubber as a rubber component, and the MABS resin comprises about 36 to 47% by weight of methylmethacrylate, about 4 to 7% by weight of acrylonitrile, about 10 to 30% by weight of butadiene-styrene copolymer rubber, and about 30 to 36% by weight of styrene.

In some embodiments, the optical disc further comprises a recording surface 2 and a reflective layer 3. The recording surface 2 is formed on the active disc 1, and the reflective layer 3 is deposited onto the recording surface 2. The dummy disc 4 is bonded to reflective layer 3.

In some embodiments, the dummy disc is bonded via an ultraviolet ray curing resin.

### Brief Description of the Drawings

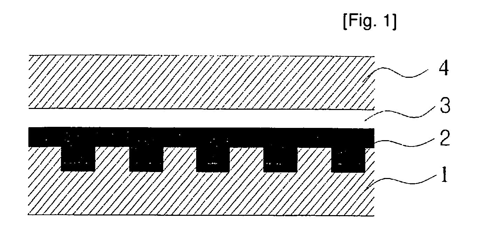

Fig. 1 is a schematic diagram showing a structure of a double-layered optical disc including an active disc and a dummy disc.

### Best Mode for Carrying Out the Invention

Fig. 1 is a cross sectional view schematically showing a configuration of a double-layered optical disc including an active disc and a dummy disc. The optical disc for a DVD includes two disc members consisting of an active disc which records information and a dummy disc which protects the active disc. The active disc and the dummy disc have a thickness of about 0.6 mm respectively.

As the active disc 1, a light-transmissive material at a wavelength of 650 nm, for example polymethylmethacrylate (PMMA), polycarbonate (PC), amorphous polyolefin, etc., may be used, but are not limited thereto. A recording fluid may be applied onto either one side or both sides of the active disc to form a recording surface 2 on which a groove is formed, which can be easily conducted by an ordinary skilled person in the art.

In one embodiment of the present invention, a reflective layer 3 is formed on the recording surface 2. The reflective layer may be formed by a method such as deposition or sputtering of a metal. Examples of the metal include aluminum, aluminum alloy, copper, copper alloy, etc. The method for forming the reflective layer can be easily conducted by an ordinary skilled person in the art.

In the present invention, methylmethacrylate-acrylonitile-butadiene-styrene copolymer (MABS) resin is used as a material for dummy disc 4.

In one embodiment, the methylmethacrylate-acrylonitrile-butadiene-styrene copolymer (MABS) resin employs polybutadiene as a rubber component and the methylmethacrylate-acrylonitrile-butadiene-styrene copolymer (MABS) resin comprises about 53 to 64% by weight of methylmethacrylate, about 3 to 5% by weight of acrylonitrile, about 10 to 30% by weight of polybutadiene, and about 14 to 19% by weight of styrene.

In another embodiment, the methylmethacrylate-acrylonitrile-butadiene-styrene copolymer (MABS) resin employs butadiene-styrene copolymer rubber as a rubber component, and comprises about 36 to 47% by weight of methylmethacrylate, about 4 to 7% by weight of acrylonitrile, about 10 to 30% by weight of butadiene-styrene copolymer rubber, and about 30 to 36% by weight of styrene.

The MABS resin may be prepared by adding a monomer mixture comprising methylmethacrylate, acrylonitrile and styrene to a polybutadiene rubber latex or a butadiene-styrene copolymer rubber latex while adjusting the refractive index of the monomer mixture to be similar to that of rubber latex and graft polymerizing through conventional emulsion polymerization.

In some embodiments, the graft emulsion polymerization may be conducted by following two methods.

In one embodiment, the content of polybutadiene rubber latex or butadiene-styrene copolymer rubber latex is fixed to about 10~30% by weight (based on solid content). A monomer mixture comprising methylmethacrylate, acrylonitrile and styrene is added to the rubber latex, adjusting the refractive index of the monomer mixture to be similar to that of rubber latex, followed by graft emulsion polymerization. The resultant product is coagulated, dehydrated and dried to obtain a fine graft methylmethacrylate-acrylonitrile-butadiene-styrene copolymer (MABS) powder. To 100 parts by weight of the graft MABS powder containing about 10~30% by weight of rubber, an antioxidant, a stabilizer and a lubricant are added and extruded to obtain MABS in pellet form.

In another embodiment, the content of polybutadiene rubber latex or butadiene-styrene copolymer rubber latex is fixed to about 40~60% by weight (based on solid content). A monomer mixture comprising methylmethacrylate, acrylonitrile and styrene is added to the rubber latex, adjusting the refractive index of the monomer mixture to be similar to that of rubber latex, followed by graft emulsion polymerization. The resultant product is coagulated, dehydrated and dried to obtain a fine graft methylmethacrylate-acrylonitrile-butadiene-styrene copolymer (MABS) powder. In a separate process, methylmethacrylate, acrylonitrile, and styrene are suspension- or bulk- polymerized to obtain a methylmethacrylate-acrylonitrile-styrene copolymer resin (MSAN) having the same refractive index as the graft MABS. To 100 parts by weight of a resin mixture of about 75~17 parts by weight of the graft MABS powder and about 25~83 parts by weight of the MSAN, an antioxidant, a lubricant, a stabilizer and other additives are added and extruded to obtain MABS in pellet form. Note that the content of rubber, methylmethacrylate, acrylonitrile, and styrene in the pellet of the above embodiments may be the same.

It is preferable that an average particle size of the rubber in the methylmethacrylate-acrylonitrile-butadiene-styrene copolymer (MABS) is about 100~350 nm, more preferably about 120~250 nm. If the average rubber particle size is less than 100 nm, the impact resistance of the dummy disc may decrease so that a crack may occur. On the other hand, if the average rubber particle size is more than 350 nm, UV permeability of the dummy disc may deteriorate.

In general, when ABS resin is used as a material for dummy disc, it may not be possible to be adhered by UV adhesion, which leads to the disadvantage of incurring additional steps, thereby productivity and price competitiveness may decrease. The present invention may provide an optical disc having good UV adhesion property, impact resistance and bending property by employing a MABS resin as a dummy disc.

In one embodiment of the present invention, the dummy disc is bonded to the reflective layer 3 via an adhesive layer. An ultraviolet ray curing resin may be used as the adhesive layer. In one embodiment, the ultraviolet ray curing resin is applied between the dummy disc and the reflective layer, and subjected to irradiating ultraviolet rays to bond the dummy disc and the reflective layer to each other. Other methods of adhesion known to those skilled in the art may alternatively be employed.

The method for preparing an optical disc of the present invention is not particularly limited. For example, a resin for producing an active disc is injected into an injection molding machine equipped with a plate having patterns to obtain an active disc. On the active disc, a composition for forming an information layer is applied to form grooves. On the foregoing surface of the information layer, a reflective layer is formed by depositing metal such as aluminium. Then, a dummy disc on which an ultraviolet ray curable adhesive is applied is bonded to the reflective layer to obtain a DVD optical disc.

The invention may be better understood by reference to the following examples which are intended for the purpose of illustration and are not to be construed as in any way limiting the scope of the present invention, which is defined in the claims appended hereto. In the following examples, all parts and percentage are by weight unless otherwise indicated.

### Mode for the Invention

### Example 1

55% by weight (solid content) of polybutadiene latex having an average rubber particle size of 200 nm, 33.23% by weight of methylmethacrylate, 2.25% by weight of acrylonitrile, and 9.52% by weight of styrene were emulsion polymerized. The resultant product was coagulated, dehydrated and dried to obtain graft MABS powder having a water content of less than 1 wt%.

To a separate reactor, 73.85% by weight of methylmethacrylate, 5% by weight of acrylonitrile, and 21.15% by weight of styrene were added and suspension polymerized. The resultant product was dehydrated and dried to obtain methylmethacrylate-acrylonitrile-styrene copolymer resin (MSAN) with a weight average molecular weight of about 105,000 in bead form.

To 100 parts by weight of a resin mixture of 31 % by weight of the graft MABS powder and 69 % by weight of the MSAN thus produced respectively, 0.3 parts by weight of Irganox 1076(Ciba) as an antioxidant, 0.2 parts by weight of ethylenebis stearamide as a lubricant, and 0.3 parts by weight of a magnesium stearate as a stabilizer were added and mixed The mixture was extruded to prepare a product in pellet form. The resin pellets were molded into test specimens for measuring physical properties and a 0.6 mm thick dummy disc. The components present in the methacrylate-acrylonitrile-butadiene-styrene copolymer (MABS) resin are 61.3% by weight of methylmethacraylate, 4.2% by weight of acrylonitrile, 17% by weight of butadiene rubber, and 17.5% by weight of styrene.

The dummy disc for DVD obtained from the above was subjected to bonding onto an active disc made of polycarbonate (product name: Makrolon CD2005 manufactured by Bayer AG) by applying an ultraviolet ray curable adhesive between the dummy disc and the active disc and irradiating ultraviolet rays to obtain an optical disc.

### Example 2

Example 2 was prepared in the same manner as in Example 1 except that MABS resin having a polybutadiene latex with an average rubber particle size of 140 nm was used as a dummy disc and polymethylmethacrylate resin (product name: IF-850 manufactured by LG Chemical Co.) was used as an active disc.

### Example 3

Example 3 was prepared in the same manner as in Example 1 except that MABS resin having a polybutadiene latex with an average rubber particle size of 140 nm was used as a dummy disc and polycarbonate (product name: Makrolon CD2005 manufactured by Bayer AG) was used as an active disc.

### Example 4

Example 4 was prepared in the same manner as in Example 1 except that MABS resin having a polybutadiene latex with an average rubber particle size of 300 nm was used as a dummy disc and polycarbonate (product name: Makrolon CD2005 manufactured by Bayer AG) was used as an active disc.

### Example 5

50 % by weight (solid content) of butadiene-styrene copolymer rubber latex (styrene contents: 25 wt%) having an average rubber particle size of 200 nm, 26.1 % by weight of methylmethacrylate, 2.5 % by weight of acrylonitrile, and 21.4 % by weight of styrene were emulsion polymerized in the presence of emulsifier, initiator, molecular weight modifier, and ion-exchanged water. The resultant product was coagulated, dehydrated and dried to obtain graft MABS powder having a water content of less than 1 wt%.

To a separate reactor, 52.2 % by weight of methylmethacrylate, 5 % by weight of acrylonitrile, and 42.8 % by weight of styrene were added and suspension polymerized in the presence of initiator, organic dispersing agent, dispersion aid, molecular weight modifier, and ion-exchanged water. The resultant product was dehydrated and dried to obtain methylmethacrylate-acrylonitrile-styrene copolymer resin (MSAN) with a weight average molecular weight of about 105,000 in bead form.

To 100 parts by weight of a resin mixture of 34 % by weight of the graft MABS powder and 66 % by weight of the MSAN thus produced respectively, 0.3 parts by weight of Irganox 1076(Ciba) as an antioxidant, 0.2 parts by weight of ethylenebis stearamide as a lubricant, and 0.3 parts by weight of a magnesium stearate as a stabilizer were added and mixed The mixture was extruded to prepare a product in pellet form. The resin pellets were molded into test specimens for measuring physical properties and a 0.6 mm thick dummy disc. The components present in the methacrylate-acrylonitrile-butadiene-styrene copolymer (MABS) resin are 43.3% by weight of methylmethacraylate, 4.2% by weight of acrylonitrile, 17 % by weight of butadiene-styrene copolymer rubber, and 35.5 % by weight of styrene.

Next, the same procedure as in Example 1 was repeated except that MABS resin obtained as describe above was used as a dummy disc and polycarbonate (product name: Makrolon CD2005 manufactured by Bayer AG) was used as an active disc.

### Comparative Example 1

Comparative Example 1 was prepared in the same manner as in Example 1 except that polycarbonate (product name: Makrolon CD2005 manufactured by Bayer AG) was used as a dummy disc and polycarbonate (product name: Makrolon CD2005 manufactured by Bayer AG) was used as an active disc.

### Comparative Example 2

Comparative Example 2 was prepared in the same manner as in Example 1 except that polymethylmethacrylate resin (product name: IF-850 manufactured by LG Chemical Co.) was used as a dummy disc and polycarbonate (product name: Makrolon CD2005 manufactured by Bayer AG) was used as an active disc.

### Comparative Example 3

Comparative Example 3 was prepared in the same manner as in Example 1 except that acrylonitrile-butadiene-styrene copolymer resin (ABS: BASF GP-35) having an average rubber particle size of 300 nm was used as a dummy disc and polycarbonate (product name: Makrolon CD2005 manufactured by Bayer AG) was used as an active disc.

### Comparative Example 4

Comparative Example 4 was prepared in the same manner as in Example 1 except that polymethylmethacrylate resin (product name: IF-850 manufactured by LG Chemical Co.) was used as both a dummy disc and an active disc.

### Comparative Example 5

Comparative Example 5 was prepared in the same manner as in Example 1 except that acrylonitrile-butadiene-styrene copolymer resin (ABS: BASF GP-35) having an average rubber particle size of 300 nm was used as a dummy disc and polymethylmethacrylate resin (product name: IF-850 manufactured by LG Chemical Co.) was used as an active disc.

The physical properties of the test specimens and dummy discs of Examples and Comparative Examples were measured as follow, and the results are shown in table 1.
(1) Injection Moldability of the dummy disc: Flowability was measured in accordance with ISO 1103 at 220°C under a 10 kg load (g/10 min).
(2) UV curability: UV curability was evaluated by using a test specimen having 125 mm length, 13 mm width, and 2.2 mm thickness. UV adhesive was applied to the area of 10mm×3mm of the test specimen. The test specimen was subjected to irradiation of ultraviolet ray having a wavelength of 365 nm and an intensity of 100 mW/□ for 20 seconds and the tensile strength was measured in accordance with ASTM D 638 to evaluate UV curability. As the UV adhesive, Loctite 3100 adhesive was used.
(3) Falling Dart Impact of dummy disc: A test piece having a thickness of 3.2mm was fixed on a cylinder of which inside diameter is 50 mm. A ball having a diameter of 1.5mm and a weight of 10 kg was dropped, such that energy onto the test piece was 70 J. The test was conducted repeatedly for 5 test pieces and an average value was calculated.
(4) Bending Test: The bending property was evaluated in accordance with DVD MIDI measurement of Sony Electronics. Inc. of Japan as to an optical disc in which a dummy disc and an active disc are bonded to each other. The optical disc was subjected to a 90° bending. When no crack was observed at the bent portion, the optical disc was evaluated to be good.
(5) Tensile Elongation: The percentage of the increase in length compared with the original length was measured in accordance with ASTM D638 with a drawing speed of 5 mm/min.
(6) Notch Izod Impact Strength of MABS: The impact strength was measured in accordance with ASTM D-256 (kgf·cm/cm).
(7) Light Transmissivity of MABS: The light transmissivity of the MABS was evaluated as total light transmittance and haze using a color computer manufactured by SUGA INSTRUMENT Co., Ltd. of Japan. The haze was calculated from the following formula: HAZE (%) = (diffused light transmittance / total light transmittance)×100. The total light transmittance (%) was calculated from the following formula: total light transmittance (%) = (light transmitted at all forward angles/ incident light)×100.

**Table 1**

| | | Example | | | | | Comparative example | | | | |
|---|---|---|---|---|---|---|---|---|---|---|---|
| | | 1 | 2 | 3 | 4 | 5 | 1 | 2 | 3 | 4 | 5 |
| Active disc | | PC | PMMA | PC | PC | PC | PC | PC | PC | PMMA | PMMA |
| Dummy disc | | MABS | MABS | MABS | MABS | MABS | PC | PMMA | ABS | PMMA | ABS |
| Injection Moldability of Dummy Disc | | ○(21) | ○(21) | ○(21) | Δ(17) | ○(23 ) | x(6) | x(4) | ⓞ(29) | x(4) | ⓞ(29) |
| Diameterof Rubber Particle (nm) | | 200 | 140 | 140 | 300 | 200 | - | - | 300 | - | 300 |
| UV Curability(Tensile Strength, kgf/□) | | OK(430) | OK(352) | OK(435) | OK(376) | OK(428) | OK(458) | OK(358) | FAIL(13 5) | OK(338) | FAIL(158) |
| Falling Dart Impact Strength on Dummy Disc (J) | | 24 | 14 | 20 | 18 | 20 | 35 | 2 | 35 | 2 | 35 |
| Bending property | | PASS | PASS | PASS | PASS | PASS | PASS | FAIL | - | FAIL | - |
| Tensile elongation(% ) | | 52 | 48 | 55 | 35 | 40 | 75 | 5 | 25 | 5 | 25 |
| MABS | HAZE | 2.0 | 1.6 | 1.6 | 2.6 | 2.3 | - | - | - | - | - |
| | Light transmissivity | 91 | 91 | 91 | 90 | 91 | - | - | - | - | - |
| | Impact strength | 20 | 13 | 13 | 23 | 17 | - | - | - | - | - |

As shown in Table 1, Comparative Example 1 employing PC (polycarbonate) resin as a dummy disc showed decreased injection moldability. Comparative Example 2 employing PMMA resin as a dummy disc showed that UV curability was assured but falling Dart impact strength of dummy disc and other properties deteriorated significantly. Comparative Examples 3 and 5 in which ABS resin was used for a dummy disc showed that UV curability was degraded. In contrast, Examples 1~5 in which MABS resin was used for a dummy disc showed good injection moldability, flowability, UV curability, as well as high impact strength, and bending property.

The present invention shall be easily carried out by an ordinary skilled person in the art. Any modifications and changes may be deemed to be within the scope of the present invention as defined in the following claims.

## Claims

1. An optical disc comprising an active disc **1** in which information is recorded; and a dummy disc **4** for protecting the active disc, wherein the active disc and the dummy disc are bonded to form a single body, and wherein the dummy disc is made of methylmethacrylate-acrylonitrile-butadiene-styrene copolymer (MABS) resin, wherein said methylmethacrylate-acrylonitrile-butadiene-styrene copolymer (MABS) resin comprises about 53 to 64% by weight of methylmethacrylate, about 3 to 5% by weight of acrylonitrile, about 10 to 30% by weight of polybutadiene and about 14 to 19% by weight of styrene.

2. An optical disc comprising an active disc **1** in which information is recorded; and a dummy disc **4** for protecting the active disc, wherein the active disc and the dummy disc are bonded to form a single body, and wherein the dummy disc is made of methylmethacrylate-acrylonitrile-butadiene-styrene copolymer (MABS) resin, wherein said methylmethacrylate-acrylonitrile-butadiene-styrene copolymer (MABS) resin comprises about 36 to 47% by weight of methylmethacrylate, about 4 to 7% by weight of acrylonitrile, about 10 to 30% by weight of butadiene-styrene copolymer rubber and about 30 to 36% by weight of styrene.

3. The optical disc as defined in Claims 1 or 2, wherein an average particle size of rubber in said methylmethacrylate-acrylonitrile-butadiene-styrene copolymer (MABS) resin is about 100~350 nm.

4. The optical disc as defined in Claims 1 or 2, wherein a recording surface **2** is formed on the active disc **1**, wherein a reflective layer **3** is deposited onto the recording surface, and wherein the dummy disc **4** is bonded to the reflective layer **3.**

5. The optical disc as defined in Claim 4, wherein said dummy disc is bonded via an ultraviolet ray curing resin.

## Patentansprüche

1. Optische Scheibe, umfassend eine Aktivscheibe **1,** in welcher Informationen aufgezeichnet werden; und eine Blindscheibe **4** zum Schützen der Aktivscheibe, wobei die Aktivscheibe und die Blindscheibe unter Bildung eines einzelnen Körpers verbunden sind, und wobei die Blindscheibe aus Methylmethacrylat-AcrylnitrilButadien-Styrol-Copolymer(MABS)-Harz hergestellt ist, wobei das Methylmethacrylat-Acrylnitril-Butadien-Styrol-Copolymer(MABS)-Harz etwa 53 bis 64 Gew.-% Methylmethacrylat, etwa 3 bis 5 Gew.-% Acrylnitril, etwa 10 bis 30 Gew.-% Polybutadien und etwa 14 bis 19 Gew.-% Styrol umfasst.

2. Optische Scheibe, umfassend eine Aktivscheibe **1,** in welcher Informationen aufgezeichnet werden; und eine Blindscheibe **4** zum Schützen der Aktivscheibe, wobei die Aktivscheibe und die Blindscheibe unter Bildung eines einzelnen Körpers verbunden sind, und wobei die Blindscheibe aus Methylmethacrylat-AcrylnitrilButadien-Styrol-Copolymer(MABS)-Harz hergestellt ist, wobei das Methylmethacrylat-Acrylnitril-Butadien-Styrol-Copolymer(MABS)-Harz etwa 36 bis 47 Gew.-% Methylmethacrylat, etwa 4 bis 7 Gew.-% Acrylnitril, etwa 10 bis 30 Gew.-% Butadien-Styrol-Copolymerkautschuk und etwa 30 bis 36 Gew.-% Styrol umfasst.

3. Optische Scheibe nach Anspruch 1 oder 2, wobei die mittlere Teilchengröße des Kautschuks im Methylmethacrylat-Acrylnitril-Butadien-Styrol-Copolymer(MABS)-Harz etwa 100~350 nm beträgt.

4. Optische Scheibe nach Anspruch 1 oder 2, wobei eine Aufzeichnungsfläche **2** auf der Aktivscheibe **1** gebildet ist, wobei eine reflektierende Schicht **3** auf der Aufzeichnungsfläche abgeschieden ist und wobei die Blindscheibe **4** mit der reflektierenden Schicht **3** verbunden ist.

5. Optische Scheibe nach Anspruch 4, wobei die Blindscheibe über ein durch Ultraviolettstrahlen aushärtendes Harz verbunden ist.

## Revendications

1. Disque optique comprenant un disque actif 1 dans lequel des informations sont enregistrées ; et un disque fictif 4 pour la protection du disque actif, le disque actif et le disque fictif étant collés de façon à former un corps unique, le disque fictif étant constitué d'une résine d'un copolymère méthacrylate de méthyle-acrylonitrile-butadiène-styrène (MABS), ladite comprenant d'environ 53 à 64 % en poids de méthacrylate de méthyle, d'environ 3 à 5 % en poids d'acrylonitrile, d'environ 10 à 30 % en poids de polybutadiène et d'environ 14 à 19 % en poids de styrène.

2. Disque optique comprenant un disque actif 1 dans lequel des informations sont enregistrées ; et un disque fictif 4 pour la protection du disque actif, le disque actif et le disque fictif étant collés de façon à former un corps unique, le disque fictif étant constitué d'une résine d'un copolymère méthacrylate de méthyle-acrylonitrile-butadiène-styrène (MABS), ladite comprenant d'environ 36 à 47 % en poids de méthacrylate de méthyle, d'environ 4 à 7 % en poids d'acrylonitrile, d'environ 10 à 30 % en poids d'un caoutchouc copolymère butadiène-styrène et d'environ 30 à 36 % en poids de styrène.

3. Disque optique tel que défini dans les revendications 1 ou 2, dans lequel la granulométrie moyenne du caoutchouc dans ladite résine d'un copolymère méthacrylate de méthyle-acrylonitrile-butadiène-styrène (MABS) est d'environ 100 à 350 nm.

4. Disque optique tel que défini dans les revendications 1 ou 2, dans lequel une surface d'enregistrement 2 est formée sur le disque actif 1, une couche réfléchissante 3 étant déposée sur la surface d'enregistrement, et le disque fictif 4 étant collé à la couche réfléchissante 3.

5. Disque optique tel que défini dans la revendication 4, dans lequel ledit disque fictif est collé par l'intermédiaire d'une résine durcissant sous l'effet de rayons ultraviolets.
